# EUROPEAN PATENT APPLICATION

(11) **EP 4 009 264 A1**
(43) Date of publication of application: **08.06.2022**
(21) Application number: 21212459.8
(22) Date of filing: 06.12.2021
(51) Int. Cl.: G06Q 30/02, G06Q 50/06

(54) **POWER PREDICTION DEVICE AND POWER PREDICTION METHOD**

(30) Priority: 07.12.2020 JP 2020202817
(71) Applicant: Toshiba Energy Systems & Solutions Corporation, Saiwai-ku Kawasaki-shi Kanagawa 2120013 (JP)
(72) Inventor: Akiba, Takashi, Kawasaki-shi, Kanagawa, 212-0013 (JP); Tamaru, Shingo, Kawasaki-shi, Kanagawa, 212-0013 (JP); Yamane, Fumiyuki, Kawasaki-shi, Kanagawa, 212-0013 (JP); Kurita, Hirofumi, Kawasaki-shi, Kanagawa, 212-0013 (JP)
(74) Representative: Hoffmann Eitle

(57) **Abstract**

A power prediction device according to the present embodiments includes an evaluation-value generator and a prediction portion. The evaluation-value generator is configured to generate a time-series evaluation value based on a time-series error of weather-related forecast data. The prediction portion is configured to, as for a time and an amount of power of demand response that changes a pattern of power consumption or power production, predict at least the time in accordance with the time-series evaluation value.

## Description

### FIELD

The embodiments of the present invention relate to a power prediction device and a power prediction method.

### BACKGROUND

Hydrogen energy is attracting attention as new energy. Hydrogen is produced by a hydrogen production device of a hydrogen system and stored in a hydrogen tank. The hydrogen stored in the hydrogen tank can be reconverted to power by a hydrogen power generator. Therefore, by connecting the hydrogen system to a power grid, it is possible to both supply power from the power grid and supply power to the power grid. The hydrogen system can thus stabilize the power grid and respond to hydrogen demand.

In addition, importance of demand response, which changes a pattern of power consumption in the hydrogen system in accordance with a state of power supply from the power grid, has come to be recognized. Meanwhile, in a case of planning a time slot for demand response beforehand and operating it, a gap may be generated between the planned time slot for demand response and a time slot in which a power system actually needs demand response.

### BRIEF DESCRIPTION OF THE DRAWINGS

FIG. 1 is a block diagram illustrating a configuration of a hydrogen energy system according to a first embodiment;
FIG. 2 is a block diagram illustrating a configuration of another hydrogen energy system;
FIG. 3 is a block diagram illustrating a detailed configuration of a power prediction device;
FIG. 4 is a diagram schematically illustrating processing in a time-and-date term generator;
FIG. 5 is a diagram in a case where forecast error information is attached to forecast information itself;
FIG. 6 is a diagram illustrating an example of generating an error in a case where forecast error information is not attached;
FIG. 7 is a diagram illustrating another example of processing in an error generator;
FIG. 8 is a diagram illustrating an example of processing of a discrete value in the error generator;
FIG. 9 is a diagram illustrating an example of a weighting process in an evaluation-value generator;
FIG. 10 is a diagram illustrating an example of an evaluation value, a threshold, and an evaluation result;
FIG. 11 is a diagram illustrating a relation among evaluation values generated by the evaluation-value generator and thresholds;
FIG. 12 is a diagram illustrating a difference between the evaluation value and the threshold as an evaluation result when the evaluation value exceeds the threshold;
FIG. 13 is a diagram illustrating a difference between the evaluation value and another threshold as an evaluation result when the evaluation value exceeds the threshold;
FIG. 14 is a diagram illustrating an example of a setting screen related to a process of predicting demand response;
FIG. 15 is a flowchart illustrating a processing example in the power prediction device;
FIG. 16 is a block diagram illustrating a configuration of a power prediction device according to a second embodiment;
FIG. 17 is a diagram schematically illustrating an example of a learning process in a learning function portion;
FIG. 18 is a diagram schematically illustrating an example of learning a coefficient of a term N by Lasso regression; and
FIG. 19 is a flowchart illustrating processing before start of processing using a result of learning.

### DETAILED DESCRIPTION

Embodiments of the present invention have been achieved in view of these circumstances and have an object to provide a power prediction device and a power prediction method that can predict a time for changing a pattern of power consumption or power production.

A power prediction device according to the present embodiments includes an evaluation-value generator and a prediction portion. The evaluation-value generator is configured to generate a time-series evaluation value based on a time-series error of weather-related forecast data. The prediction portion is configured to, as for a time and an amount of power of demand response that changes a pattern of power consumption or power production, predict at least the time in accordance with the time-series evaluation value.

A power prediction device and a power prediction method according to the embodiments of the present invention will now be explained in detail with reference to the accompanying drawings. The embodiments described below are only examples of the embodiments of the present invention and the present invention is not limited to the embodiments. In the drawings referred to in the embodiments, same parts or parts having identical functions are denoted by like or similar reference characters and there is a case where redundant explanations thereof are omitted. Further, for convenience of explanation, there are cases where dimensional ratios of the parts in the drawings are different from those of actual products and some part of configurations is omitted from the drawings.

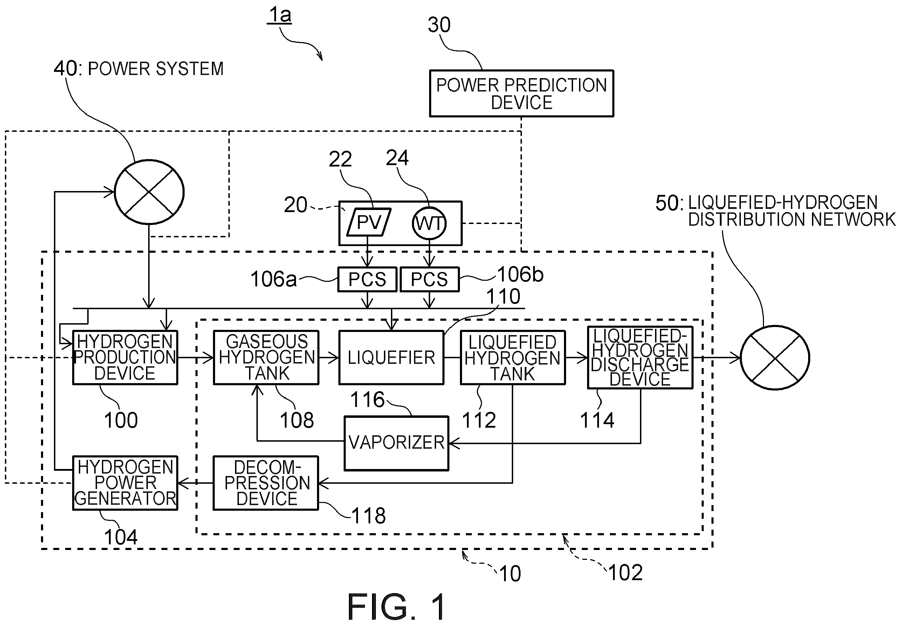

FIG. 1 is a block diagram illustrating a configuration of a hydrogen energy system 1a according to a first embodiment. As illustrated in FIG. 1, the hydrogen energy system 1a according to the present embodiment is a system that can change a pattern of power consumption or power production in accordance with a predicted relation between supply and demand of power. The hydrogen energy system 1a is configured to include a hydrogen system 10, a renewable energy power generator 20, and a power prediction device 30. FIG. 1 further illustrates a power system 40 and a liquefied-hydrogen distribution network 50. Although the hydrogen energy system 1a according to the present embodiment is configured to include the renewable energy power generator 20, the configuration is not limited thereto. For example, it is also possible that the hydrogen energy system 1a is configured not to include the renewable energy power generator 20. Further, it is also possible that the hydrogen system 10 is configured not to include a decompression device 118 and a hydrogen power generator 104.

In the present embodiment, changing a consumption pattern in accordance with a state of power supply is referred to as demand response (hereinafter, also DR). There are two types of demand response: so-called "downward DR" as "demand reduction" and so-called "upward DR" as "demand increase". At least either reduction of the amount of power consumption of the hydrogen energy system 1a or increase of the amount of power production is performed in so-called "downward DR". At least either increase of the amount of power consumption of the hydrogen energy system 1a or reduction of the amount of power production is performed in so-called "upward DR". Therefore, it is possible to effectively perform peak shaving of the power system 40 in "downward DR". In "upward DR", it is possible to stabilize the quality of electricity, such as a voltage or the frequency, by promoting increase in power consumption to a consumer when excessive supply of power occurs.

The hydrogen system 10 produces hydrogen by using first power generated by the renewable energy power generator 20 and second power supplied from the power system 40. The detailed configuration of the hydrogen system 10 will be described later.

The renewable energy power generator 20 includes a natural energy-derived power generation facility and generates the first power. This renewable energy power generator 20 includes, for example, a photovoltaic power generator 22 using sunlight and a wind turbine generator 24 that generates power using wind. The renewable energy power generator 20 does not require fuel such as fossil fuel, but the amount of power generated is unstable because of environmental influences such as weather and wind power. The renewable energy power generator 20 may be a power generator that uses new energy such as biomass or biomass-derived waste.

The power prediction device 30 can predict a relation between supply and demand of power and controls the hydrogen system 10, the renewable energy power generator 20, and the second power supplied from the power system 40. The detailed configuration of the power prediction device 30 will be described later.

The power system 40 supplies power generated by, for example, a thermal power plant to the hydrogen system 10, the renewable energy power generator 20, and the power prediction device 30 via a power grid.

The liquefied-hydrogen distribution network 50 is a distribution network that transports hydrogen as a liquid to supply it to a hydrogen consumer.

The detailed configuration of the hydrogen system 10 is described here. The hydrogen system 10 includes a hydrogen production device 100, a hydrogen storage and supply device 102, the hydrogen power generator 104, and power conditioners 106a and 106b. In a case where the hydrogen energy system 1a does not include the renewable energy power generator 20 as described above, it is also possible that the hydrogen system 10 is configured not to include the power conditioners 106a and 106b.

The hydrogen production device 100 is, for example, a water electrolysis device that produces hydrogen and oxygen by causing an electric current to pass through an alkaline solution. The hydrogen production device 100 also stores the produced hydrogen in a gaseous hydrogen tank 108 of the hydrogen storage and supply device 102 via a hydrogen pipe. That is, the hydrogen production device 100 produces hydrogen by using the first power generated by the renewable energy power generator 20 and the second power supplied from the power system 40 and stores the produced hydrogen in the hydrogen storage and supply device 102.

The hydrogen storage and supply device 102 stores therein the hydrogen produced by the hydrogen production device 100 and supplies liquefied hydrogen via the liquefied-hydrogen distribution network 50. The details of the hydrogen storage and supply device 102 will be described later.

The hydrogen power generator 104 generates power and heat by using the hydrogen supplied from the hydrogen storage and supply device 102. The heat generated here is supplied to a hot water network as hot water, for example. The hydrogen power generator 104 includes, for example, a fuel cell. As for oxygen, the fuel cell may use oxygen in the air or oxygen that is produced in association with production of hydrogen by the hydrogen production device 100 and is accumulated in an oxygen tank.

The power conditioner 106a is configured to include a converter, for example. The converter converts direct-current power output from the photovoltaic power generator 22 into predetermined alternating-current power. Similarly, the power conditioner 106b is configured to include a converter, for example, and converts direct-current power output from the wind turbine generator 24 into predetermined alternating-current power.

The configuration of the hydrogen storage and supply device 102 is described here in detail. The hydrogen storage and supply device 102 is configured to include the gaseous hydrogen tank 108, a liquefier 110, a liquefied hydrogen tank 112, a liquefied-hydrogen discharge device 114, a vaporizer 116, and the decompression device 118.

The gaseous hydrogen tank 108 stores therein gaseous hydrogen produced by the hydrogen production device 100. The gaseous hydrogen tank 108 is connected to the hydrogen production device 100 and the liquefier 110 via a pipe and supplies the gaseous hydrogen to the liquefier 110.

The liquefier 110 is, for example, a cooler/compressor and converts the gaseous hydrogen supplied from the gaseous hydrogen tank 108 into liquefied hydrogen. That is, the liquefier 110 converts the hydrogen supplied from the gaseous hydrogen tank 108 into liquefied hydrogen and supplies it to the liquefied hydrogen tank 112 via a pipe.

The liquefied hydrogen tank 112 stores therein the liquefied hydrogen supplied from the liquefier 110. The liquefied hydrogen tank 112 stores therein the liquefied hydrogen supplied from the liquefier 110 and supplies the liquefied hydrogen to the liquefied-hydrogen discharge device 114 via a pipe.

The liquefied-hydrogen discharge device 114 supplies the liquefied hydrogen supplied from the liquefied hydrogen tank 112 to the liquefied-hydrogen distribution network 50 and the vaporizer 116. The liquefied-hydrogen discharge device 114 may be integrated with the liquefied hydrogen tank 112.

The vaporizer 116 converts the liquefied hydrogen supplied from the liquefied-hydrogen discharge device 114 into gaseous hydrogen. That is, the vaporizer 116 converts the liquefied hydrogen supplied from the liquefied-hydrogen discharge device 114 into gaseous hydrogen and supplies it to the gaseous hydrogen tank 108 via a pipe.

The decompression device 118 is connected to the liquefied hydrogen tank 112 and the hydrogen power generator 104 via a pipe. That is, the decompression device 118 decompresses the liquefied hydrogen supplied from the liquefied hydrogen tank 112 via a pipe and supplies the decompressed hydrogen to the hydrogen power generator 104 via a pipe.

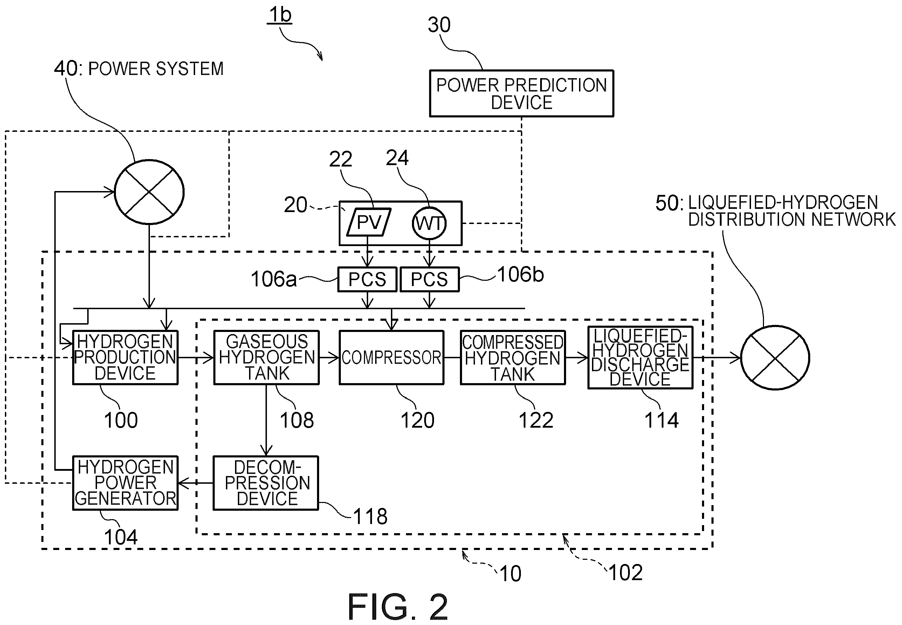

FIG. 2 is a block diagram illustrating a configuration of a hydrogen energy system 1b. The hydrogen energy system 1b is different from the hydrogen energy system 1a in producing compressed hydrogen in place of liquefied hydrogen. The power prediction device 30 can predict supply and demand of power also in the hydrogen energy system 1b that produces the compressed hydrogen in place of the liquefied hydrogen. Differences between the hydrogen energy system 1b and the hydrogen energy system 1a are described below.

As illustrated in FIG. 2, the hydrogen energy system 1b according to the present embodiment produces compressed hydrogen. That is, the hydrogen storage and supply device 102 of the hydrogen energy system 1b is different from the hydrogen storage and supply device 102 of the hydrogen energy system 1a in including a compressor 120, a compressed hydrogen tank 122, and a compressed-hydrogen discharge device 124.

The compressor 120 compresses gaseous hydrogen supplied from the gaseous hydrogen tank 108 to convert it into compressed hydrogen and supplies the compressed hydrogen to the compressed hydrogen tank 122 via a pipe. The compressed hydrogen tank 122 stores therein the compressed hydrogen supplied from the compressor 120. The compressed hydrogen tank 122 stores therein the compressed hydrogen supplied from the compressor 120 and supplies the compressed hydrogen to the compressed-hydrogen discharge device 124 via a pipe. The compressed-hydrogen discharge device 124 supplies the compressed hydrogen supplied from the compressed hydrogen tank 122 to a compressed-hydrogen distribution network 126. It is also possible that the hydrogen system 10 is configured not to include the compressed hydrogen tank 122, the decompression device 118, and the hydrogen power generator 104. In a case where the hydrogen energy system 1b does not include the renewable energy power generator 20, it is also possible that the hydrogen system 10 is configured not to include the power conditioners 106a and 106b.

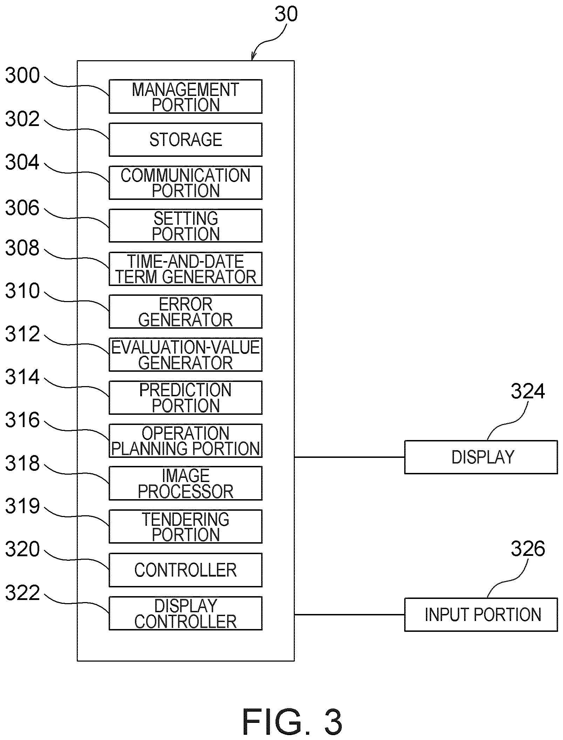

FIG. 3 is a block diagram illustrating a detailed configuration of the power prediction device 30. As illustrated in FIG. 3, the power prediction device 30 is configured to include, for example, a CPU (Central Processing Unit) and has a management portion 300, a storage 302, a communication portion 304, a setting portion 306, a time-and-date term generator 308, an error generator 310, an evaluation-value generator 312, a prediction portion 314, an operation planning portion 316, an image processor 318, a tendering portion 319, a controller 320, a display controller 322, a display 324, and an input portion 326. The power prediction device 30 implements functions of the respective components by executing programs stored in the storage 302. Each of the communication portion 304, the setting portion 306, the time-and-date term generator 308, the error generator 310, the evaluation-value generator 312, the prediction portion 314, the operation planning portion 316, the image processor 318, the tendering portion 319, the controller 320, and the display controller 322 may be configured by an independent electronic circuit.

The management portion 300 controls the respective components of the power prediction device 30.

The storage 302 is implemented by a semiconductor memory element such as a RAM (Random Access Memory) or a flash memory, a hard disk, or the like. The storage 302 stores therein the programs to be executed by the power prediction device 30, various control data, and various weather-related data.

The communication portion 304 communicates with an external network to acquire weather-related forecast data, for example, for 60 days. The weather-related forecast data is data for every unit time, for example, for every 30 minutes. The weather-related forecast data includes, for example, a weather forecast, a temperature forecast, an insolation amount forecast, a forecast of renewable energy power generation, a wholesale electricity market price forecast, and a balancing market price forecast.

The setting portion 306 sets data required for causing the power prediction device 30 to operate. For example, the setting portion 306 sets various parameters required for predicting a relation between supply and demand of power based on input from the input portion 326.

The time-and-date term generator 308 generates a numerical value indicating the likelihood of demand response at each time and date. For example, the time-and-date term generator 308 generates a numerical value indicating the likelihood of demand response at each time and date in each region based on past weather-related data. The time-and-date term generator 308 converts the weather, the temperature, the insolation amount, the renewable energy power generation, the wholesale electricity market price, and the balancing market price forecast at each time and date in each region for past 20 years into numerical values and stores the numerical values in the storage 302, for example. That is, these numerical values are configured to have high correlation with past power demand.

For example, when a region and a time and date are specified, the time-and-date term generator 308 may add the values of the weather, the temperature, the insolation amount, the renewable energy power generation, the wholesale electricity market price, and the balancing market price forecast at that time and date in that region in accordance with predetermined coefficients to output the result as a numerical value. In this case, each of the temperature, the insolation amount, the renewable energy power generation, and the wholesale electricity market price is converted into a numerical value as a continuous value. Meanwhile, the weather is a concept such as "sunny", "cloudy", and "rainy" and is converted into a numerical value as a discrete value. For example, discrete values, such as 500, 300, and 100, are assigned to "sunny", "cloudy", and "rainy", respectively. Further, the time-and-date term generator 308 may add the values of the weather, the temperature, the insolation amount, the renewable energy power generation, the wholesale electricity market price, and the balancing market price forecast in accordance with values of coefficients in the evaluation-value generator 312 described later.

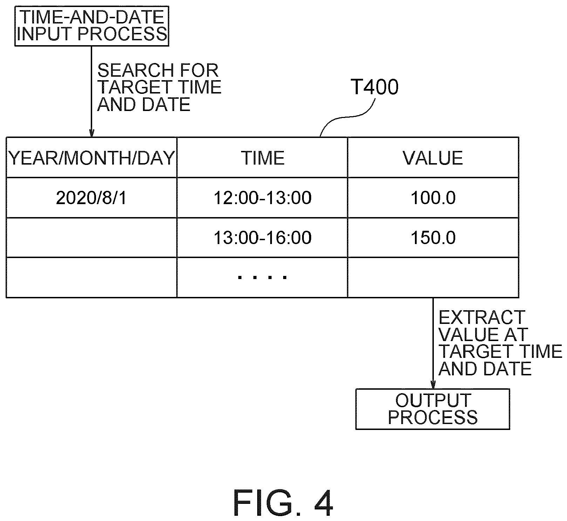

FIG. 4 is a diagram schematically illustrating processing in the time-and-date term generator 308. As illustrated in FIG. 4, a table T400 is a schematic example of a table when weather-related data from 12:00 to 13:00 and from 13:00 to 16:00 on August 1 is converted into numerical values.

The time-and-date term generator 308 stores a numerical value indicating the likelihood of demand response at a target time and date as the table T400 in the storage 302. In this case, the time-and-date term generator 308 can search the table T400 in the storage 302 for a preset value with regard to the target time and date and output the value. In this manner, when the time and date is input, the time-and-date term generator 308 converts the likelihood of demand response into a numerical value to correspond to that time and date and outputs the numerical value. Therefore, it is possible to use the numerical value indicating the likelihood of demand response in the past for prediction of a relation between supply and demand of power.

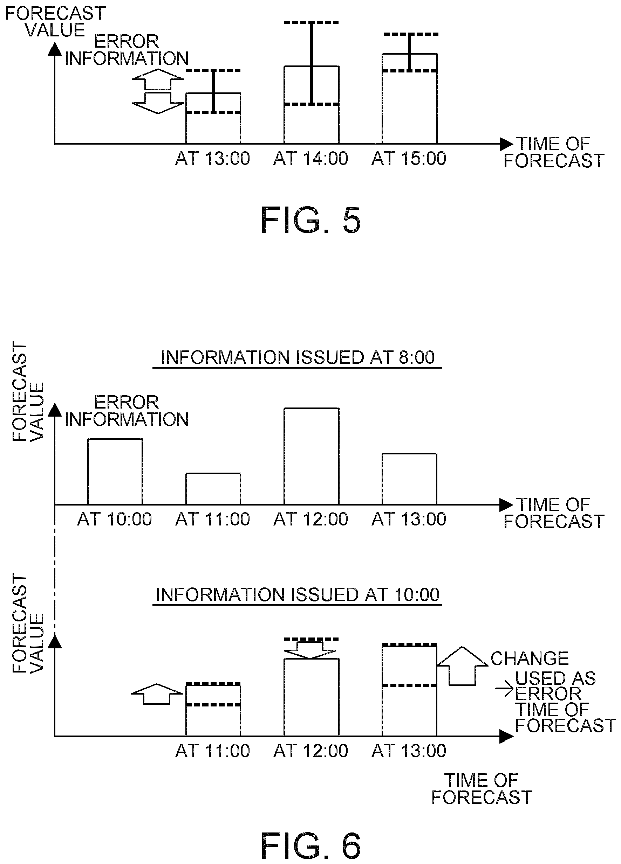

FIG. 5 is a diagram in a case where forecast error information is attached to forecast information itself. The horizontal axis represents a time of forecast and the vertical axis represents a forecast value. The forecast value is a temperature forecast, an insolation amount forecast, a renewable energy power generation forecast, or a wholesale electricity market price acquired by the communication portion 304 through communication with an external network and is a value in arbitrary unit. In such forecast data, there are cases where forecast error information is attached to forecast information itself and where forecast error information is not attached to forecast information itself. FIG. 5 illustrates a case where forecast error information is attached to forecast information itself.

FIG. 6 is a diagram illustrating an example of generating an error in a case where forecast error information is not attached. The upper chart illustrates weather-related forecast data issued at 8:00, for example. The lower chart illustrates weather-related forecast data issued at 10:00, for example. The data is acquired by the communication portion 304 through communication with an external network.

The error generator 310 generates a time-series error based on difference values of weather-related forecast data at different times. That is, the error generator 310 can generate a time-series error based on difference values of weather-related forecast data at the different times in a case where forecast error information is not attached.

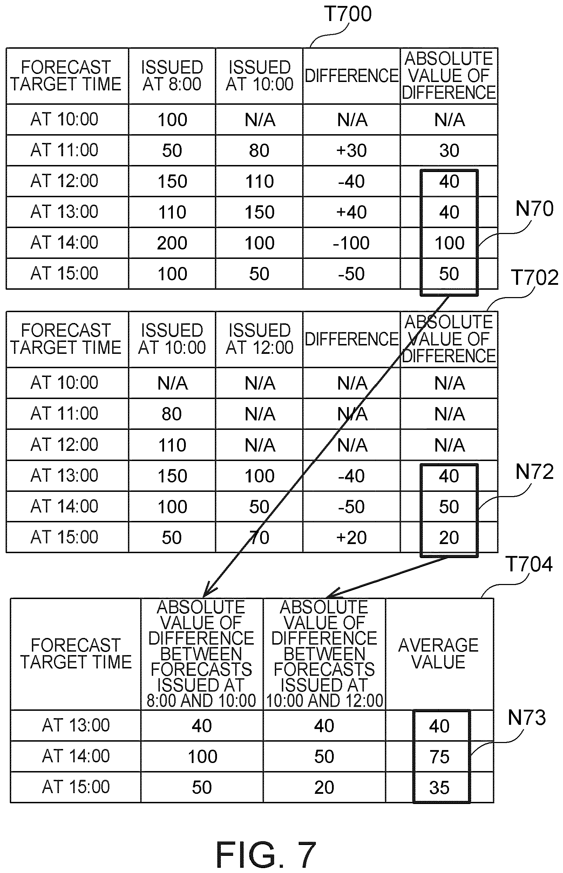

FIG. 7 is a diagram illustrating another example of processing in the error generator 310. A table T700 indicates weather-related forecast data issued at 8:00 and 10:00, a difference value between them, and an absolute value N70 of the difference value. As the absolute value N70 becomes larger, a gap between a power generation forecast and a forecast of power demand in a market, a general power transmission and distribution business operator, or the like becomes larger, so that it is likely that a gap between the amount of power production and the amount of power consumption is generated.

Similarly, a table T702 indicates weather-related forecast data issued at 10:00 and 12:00, a difference value between them, and an absolute value N72 of the difference value. As described above, as the absolute value N72 becomes larger, the gap between the power generation forecast and the forecast of power demand in the market, the general power transmission and distribution business operator, or the like becomes larger, so that it is likely that the gap between the amount of power production and the amount of power consumption is generated.

A table T704 indicates a times-series value of the absolute value N70, a time-series value of the absolute value N72, and a time-series value of an average value N73 of them. As indicated in the table T704, the error generator 310 can generate a plurality of difference values of forecast data. In this case, the error generator 310 generates a difference value of forecast data based on a statistical value, for example, an average value or an intermediate value of the plural difference values. As described above, as the average value N73 of the absolute value N70 and the absolute value N72 becomes larger, the gap between the power generation forecast and the forecast of power demand in the market, the general power transmission and distribution business operator, or the like becomes larger, so that it is likely that the gap between the amount of power production and the amount of power consumption is generated.

Although the example in FIG. 7 uses an absolute value, the value used in the processing is not limited thereto. For example, the error generator 310 may generate a difference value of forecast data based on a statistical value, for example, an average value or an intermediate value of the plural difference values of forecast data. An error may be expressed as a percent or a ratio of forecast data to original data. The error may be expressed as a percent, for example, 10 percent when the original data is 100 and a difference value is 10 and -5 percent when the original data is 100 and the difference value is -5.

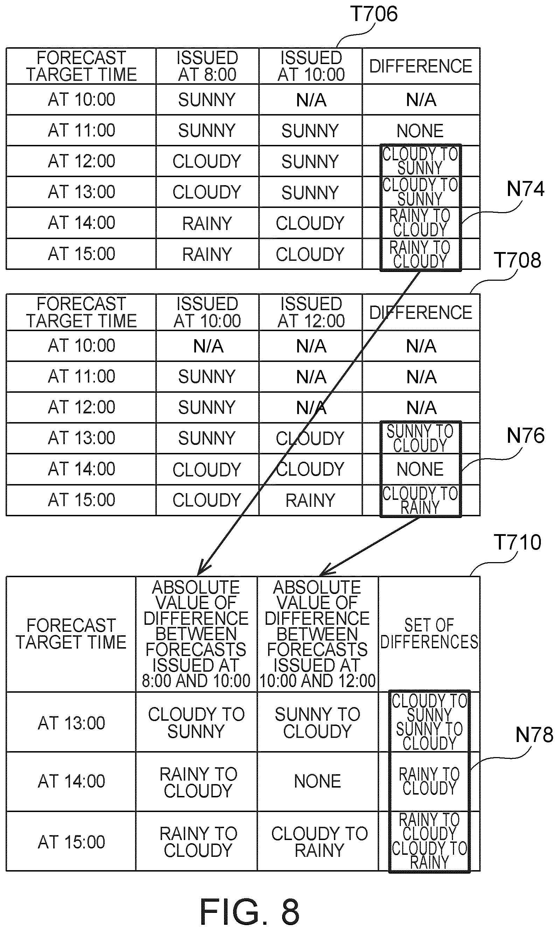

FIG. 8 is a diagram illustrating an example of processing of a discrete value in the error generator 310. A table T706 indicates weather forecasts issued at 8:00 and 10:00. A value N74 is a difference value between the weather forecasts. Numerical values are assigned as forecast errors between the weather forecasts issued at 8:00 and 10:00, as will be described later. For example, 500, 300, 200, and 200 are assigned as the forecast errors to "sunny to cloudy", "cloudy to sunny", "cloudy to rainy", and "rainy to cloudy", respectively.

Similarly, a table T708 indicates weather forecasts issued at 10:00 and 12:00. A value N76 is a difference value between them. Numerical values, for example, 500, 200, and 200 are assigned as forecast errors between the weather forecasts issued at 10:00 and 12:00 to "sunny to cloudy", "cloudy to rainy", and "rainy to cloudy", respectively, as will be described later.

A table T710 indicates a set value N78 of the weather difference value N74 and the weather difference value N76. The error generator 310 generates the set value N78 by using the difference value N74 and the difference value N76 corresponding to that difference value N74. That is, the error generator 310 converts a gap between a power generation forecast and supply and demand of power in a market, a general power transmission and distribution business operator, or the like, which is caused by the gap between the weather forecasts, into a numerical value as the set value N78. For example, the error generator 310 generates the set value N78 based on a statistical value, for example, an average value or an addition value of the difference value N74 and the difference value N76. In a case where a forecast changes from, for example, "cloudy to sunny" to "sunny to cloudy" and the forecast at 8:00 and the forecast at 12:00 are coincident with each other as indicated in the row of 13:00, a half value of the numerical value for "cloudy to sunny", for example, may be used as the set value N78, instead of simply averaging or adding the numerical value for "cloudy to sunny" and the numerical value for "sunny to cloudy". As described above, the error generator 310 converts a statistical gap between a power generation forecast and supply and demand of power in a market, a general power transmission and distribution business operator, or the like, which is caused by the error between the weather forecasts, into numerical values as the difference value N74, the difference value N76, and the set value N78, for example. Although the example in FIG. 8 uses an absolute value, the value used in the processing is not limited thereto. For example, numerical values, for example, 500, -300, 200, and -200 may be assigned to "sunny to cloudy", "cloudy to sunny", "cloudy to rainy", and "rainy to cloudy", respectively.

The evaluation-value generator 312 generates a time-series evaluation value based on a time-series error of weather-related forecast data. For example, the evaluation-value generator 312 generates a time-series evaluation value based on a time-series error of a plurality of types of forecast data.

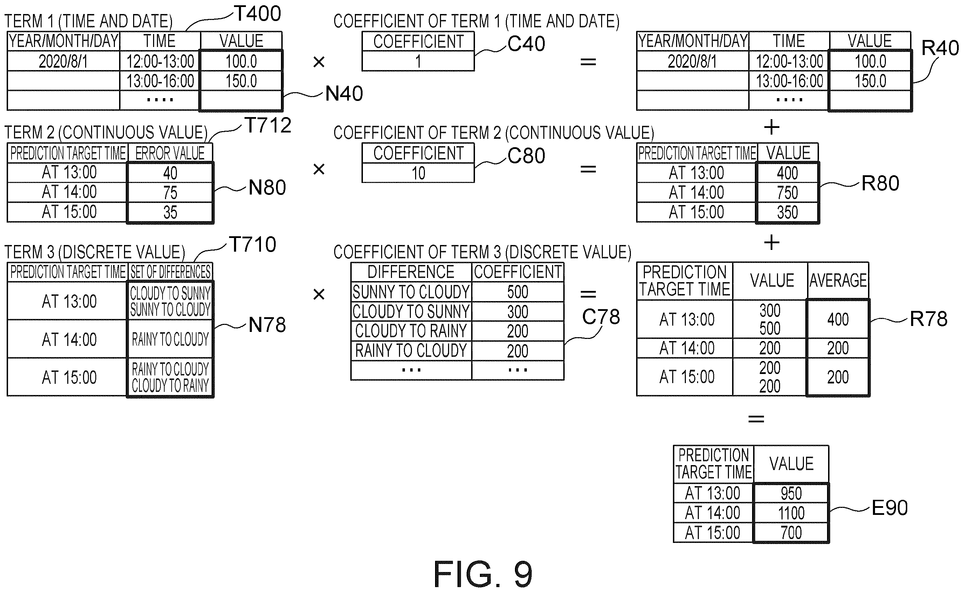

FIG. 9 is a diagram illustrating an example of a weighting process in the evaluation-value generator 312. As illustrated in FIG. 9, the evaluation-value generator 312 multiplies a time-series numerical string N40 generated by the time-and-date term generator 308 by a coefficient C40 as a weight to generate a multiplied value R40. Similarly, the evaluation-value generator 312 multiplies an error value string N80 in a table T712 that is based on weather-related data acquired by the communication portion 304 by a coefficient C80 as a weight to generate a multiplied value R80. The weather-related data is, for example, a temperature, an insolation amount, the amount of renewable energy power generation, and a wholesale electricity market price (see FIG. 5). Although only a term 2 is described here for simplifying description, the similar description can be applied to other terms. For example, the evaluation-value generator 312 may multiply each of error value strings of the temperature, the insolation amount, the amount of renewable energy power generation, the wholesale electricity market price, and a balancing market price forecast by a corresponding coefficient to generate a multiplied value.

Similarly, the evaluation-value generator 312 assigns a value as a coefficient C78 to the set value N78 generated by the error generator 310 to generate an average value R78 obtained by averaging with regard to each set value. The coefficient C78 is a value obtained by assigning a discrete value to each of combinations such as "sunny to cloudy", "cloudy to sunny", "cloudy to rainy", and "rainy to cloudy" and multiplying the discrete value by a coefficient as a weight. That is, the coefficient C78 is a multiplied value of each discrete value by the coefficient. As described above, the evaluation-value generator 312 generates a score in accordance with a combination of sunny, cloudy, and rainy in a case where a gap between weather forecasts including at least sunny, cloudy, and rainy is used as an error. The evaluation-value generator 312 then adds the multiplied value R40, the multiplied value R80, and the average value R78 to one another to generate an evaluation value E90 with regard to each time and date. As understood from the above description, the evaluation-value generator 312 generates the time-series evaluation value E90 based on a value obtained by adding a plurality of types of time-series errors with respective predetermined weights to each other. Further, the evaluation-value generator 312 generates the time-series evaluation value E90 also by using the time-series numerical string N40.

Furthermore, in a case where there are both upward and downward time-series errors (see FIG. 5), the evaluation-value generator 312 selects a larger one of them and performs evaluation. For example, the error value string N80 includes error values when a larger one of the upward error and the downward error is selected in a case where both the upward and downward errors are present. Further, in a case where both the upward and downward time-series errors are present (see FIG. 5), the evaluation-value generator 312 may perform evaluation based on an average of absolute values of both the errors. For example, the error value string N80 may include average values of both the upward error and the downward error as error values in a case where both the upward error and the downward error are present. Further, the upward error and the downward error may be used as evaluation with regard to upward DR and downward DR, respectively.

As for a time and the amount of power of demand response that changes a pattern of power consumption or power production, the prediction portion 314 predicts at least the time in accordance with the time-series evaluation value E90 generated by the evaluation-value generator 312.

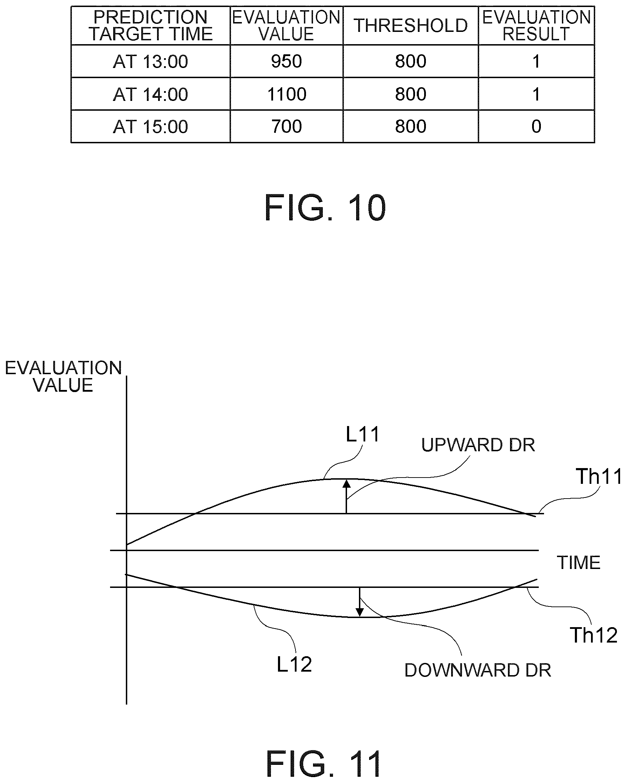

FIG. 10 is a diagram illustrating an example of the evaluation value E90, a threshold used by the prediction portion 314, and an evaluation result indicating whether to perform demand response with regard to each prediction target time.

Demand response is used for stabilizing the power system 40. Therefore, it is considered that demand response is highly likely to be needed at a time and date at which an original power demand forecast and an original power supply forecast for the power system 40 are wrong. In other words, demand response is used when a forecast is wrong and the balance between demand and supply of power is lost. Therefore, the prediction portion 314 assigns a value 1 as an evaluation result to a time at which the evaluation value E90 exceeds a predetermined threshold 800, as illustrated in FIG. 10. That is, when the evaluation result is 1 at a time, the prediction portion 314 predicts that time as a time at which demand response that changes a pattern of power consumption or power production is to be performed. Further, the prediction portion 314 may assign a value 1 as an evaluation result to a time that is contained in a top predetermined percentage of times at which the evaluation value E90 exceeds the predetermined threshold 800.

FIG. 11 is a diagram illustrating a relation among evaluation values L11 and L12 generated by the evaluation-value generator 312 and thresholds Th11 and Th12. The vertical axis represents an evaluation value, and the horizontal axis represents a time. The evaluation values L11 and L12 are evaluation values in different time slots or different regions.

The evaluation value L11 in a range illustrated in FIG. 11 is a real number and is an example of a positive value. The evaluation value L12 is a real number and is an example of a negative value. The threshold Th11 is a threshold on the positive side. The threshold Th12 is a threshold on the negative side.

As illustrated in FIG. 11, the prediction portion 314 predicts the amount of increase/reduction of power based on the magnitude of the absolute value of the evaluation value L11 or L12 at each prediction target time. For example, it is assumed that the actual amount of power supply by a market, a general power transmission and distribution business operator, or the like becomes more than a forecast, as the evaluation value L11 at each prediction target time becomes larger. In this case, it is predicted that power demand that is more than power demand planned by the market or the general power transmission and distribution business operator is demanded. Therefore, the prediction portion 314 predicts that "upward DR" as increase of demand is needed when the evaluation value L11 is above the threshold Th11 and swings upward on the positive side.

Meanwhile, it is assumed that the actual amount of power supply by the market, the general power transmission and distribution business operator, or the like becomes less than a forecast, as the evaluation value L12 at each prediction target time becomes smaller to the negative side. In this case, it is predicted that power demand less than power demand planned by the market or the general power transmission and distribution business operator is demanded. Therefore, the prediction portion 314 predicts that "downward DR" as demand reduction is needed when the evaluation value L12 is below the threshold Th12 and swings downward on the negative side. In this manner, the prediction portion 314 performs prediction in which the amount of demand reduction or the amount of demand increase of power in demand response is increased, as a value beyond a threshold becomes larger.

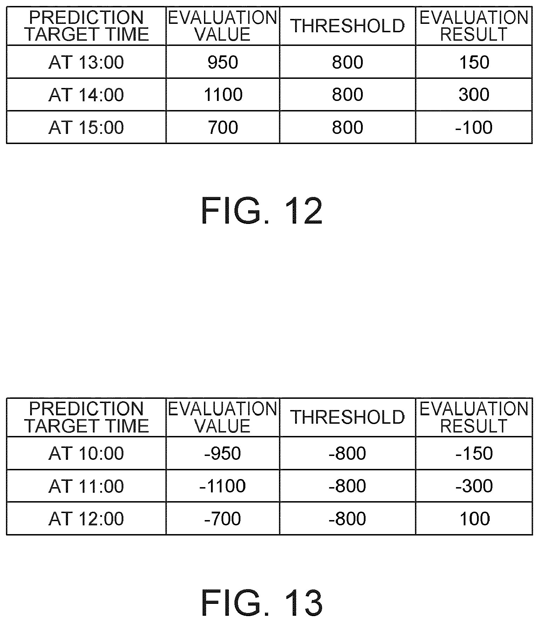

FIG. 12 is a diagram illustrating a difference between the evaluation value L11 and 800 that is the threshold Th11 as an evaluation result when the evaluation value L11 exceeds the threshold Th11. As illustrated in FIG. 12, the prediction portion 314 predicts that "upward DR" as demand increase is needed at 13:00 and 14:00. In this case, the prediction portion 314 predicts that the amount of "upward DR" is 150 and 300, respectively.

FIG. 13 is a diagram illustrating a difference between the evaluation value L12 and -800 that is the threshold Th12 as an evaluation result when the evaluation value L12 is below the threshold Th12. As illustrated in FIG. 13, the prediction portion 314 predicts that "downward DR" as demand reduction is needed at 10:00 and 11:00. In this case, the prediction portion 314 predicts that the amount of "downward DR" is -150 and -300, respectively. Further, in a case where weather-related forecast data is a single type of data, the prediction portion 314 may predict increase of power demand when the time-series error swings upward and predict reduction of power demand when the time-series error swings downward.

The operation planning portion 316 sets data required for causing the controller 320 to operate. For example, the operation planning portion 316 makes an operation plan of the hydrogen energy system 1a or 1b in accordance with a time and the amount of power corresponding to the amount of demand increase of "upward DR" and a time and the amount of power corresponding to the amount of demand reduction of "downward DR" that are predicted by the prediction portion 314. More specifically, the operation planning portion 316 makes an operation plan that increases the amount of power corresponding to the amount of demand increase at a prediction time of "upward DR". In this case, the operation planning portion 316 makes an operation plan that increases the production amount of a hydrogen production device in accordance with the amount of power corresponding to the amount of demand increase, for example. Alternatively, the operation planning portion 316 makes an operation plan that causes the hydrogen power generator 104 to reduce the amount of power corresponding to the amount of demand increase at the prediction time of "upward DR". Alternatively, the operation planning portion 316 makes an operation plan that causes the power conditioner(s) 106a, 106b to reduce the amount of power corresponding to the amount of demand increase at the prediction time of "upward DR". Therefore, it is possible to perform peak shaving of the power system 40.

Meanwhile, the operation planning portion 316 makes an operation plan that reduces the amount of power corresponding to the amount of demand reduction at a prediction time of "downward DR". In this case, the operation planning portion 316 makes an operation plan that reduces the production amount of a hydrogen production device in accordance with the amount of power corresponding to the amount of demand reduction, for example. Alternatively, the operation planning portion 316 makes an operation plan that causes the hydrogen power generator 104 to increase the amount of power corresponding to the amount of demand reduction at the prediction time of "downward DR" and generate power. Alternatively, the operation planning portion 316 makes an operation plan that causes the power conditioner(s) 106a, 106b to increase the amount of power corresponding to the amount of demand reduction at the prediction time of "downward DR". Therefore, it is possible to stabilize the quality of electricity, such as a voltage or the frequency of the power system 40.

The image processor 318 generates a planned value of the operation planning portion 316, various types of information, and a setting screen as images.

The tendering portion 319 tenders the amount of power for which demand response is available at each time, in accordance with a time and the amount of power corresponding to the amount of demand increase of "upward DR" and a time and the amount of power corresponding to the amount of demand reduction of "downward DR", predicted by the prediction portion 314, to a market. The market means, for example, a balancing market. Alternatively, the tendering portion 319 notifies an aggregator of the amount of power for which demand response is available. The aggregator tenders the notified amount of power for which demand response is available to the market. The aggregator is an aggregation coordinator that directly accesses, for example, a balancing market. By obtaining the available DR amount by using a prediction result in this manner, it is possible to increase the possibility that DR is sold in the market and increase the expectations of DR income.

The controller 320 controls each device in the hydrogen energy system 1a or 1b based on the operation plan made by the operation planning portion 316.

The display controller 322 displays the image generated by the image processor 318 on the display 324. The display 324 is, for example, a monitor and displays the image generated by the image processor 318, for example. The input portion 326 is configured by a keyboard and a mouse, for example. The input portion 326 inputs an input signal in accordance with an operation by an operator to the controller 320.

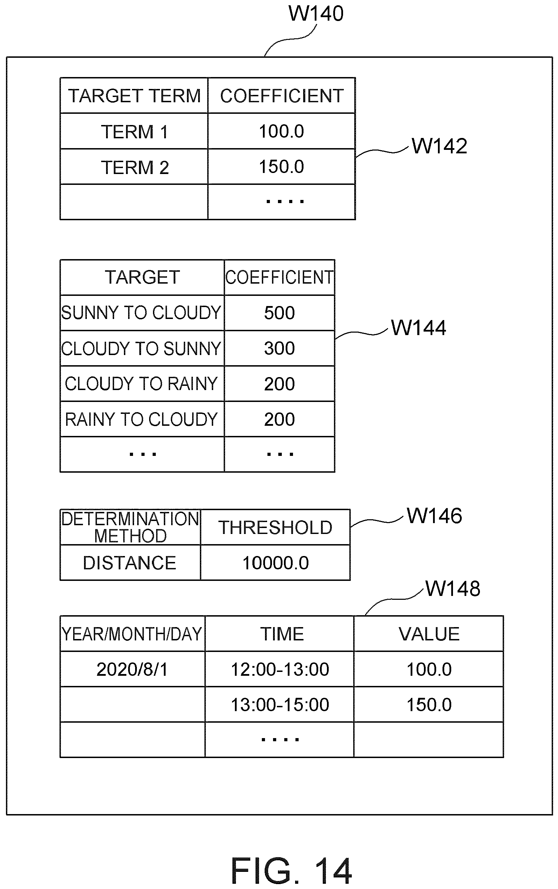

FIG. 14 is a diagram illustrating an example of a setting screen related to a process of predicting demand response, generated by the image processor 318. The image processor 318 generates a screen W140 that the display controller 322 displays on the display 324, as illustrated in FIG. 14. The screen W140 includes screens W142, W144, W146, and W148, for example.

The screen W142 is a screen example for setting coefficients of terms 1 to N of a time-and-date term and weather-related forecast data. The operator can set values of the coefficients of the terms 1 to N via the input portion 326.

The screen W144 is a screen example for setting the coefficient C78 (see FIG. 9). The operator can set a value of the coefficient C78 via the input portion 326.

The screen W146 is a screen example for setting a threshold used by the prediction portion 314. The operator can set the threshold via the input portion 326. The screen W148 is a setting screen example in a case of setting or modifying data in a table used by the time-and-date term generator 308. The operator can set or modify data via the input portion 326.

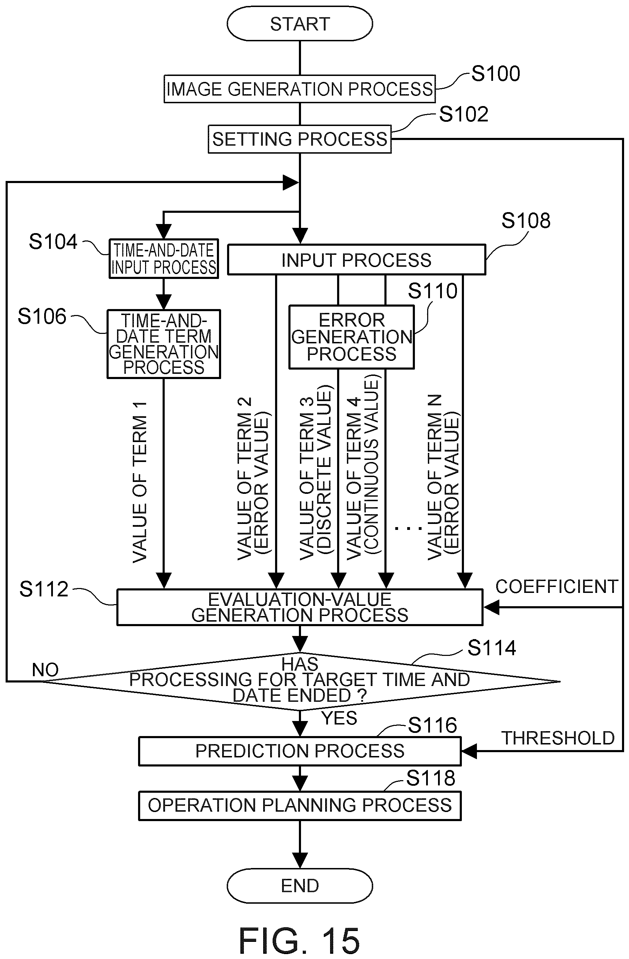

The configuration according to the present embodiment has been described above. Next, an example of processing in the power prediction device 30 is described with reference to FIG. 15. FIG. 15 is a flowchart illustrating a processing example in the power prediction device 30. Here, a case is described in which weather-related data required for processing in the power prediction device 30 has already been stored in the storage 302 via the communication portion 304.

First, the image processor 318 generates a setting screen as an image (Step S100). The display controller 322 then displays the image generated by the image processor 318 on the display 324.

Next, the setting portion 304 sets various types of information in the controller 320, the time-and-date term generator 308, the error generator 310, and the evaluation-value generator 312 by using an input signal input by an operation by an operator for the setting screen displayed on the display 324 (Step S102). Accordingly, coefficients are set in the evaluation-value generator 312, and a threshold is set in the prediction portion 314. The management portion 300 then starts processing control in which the time-and-date term generator 308, the error generator 310, and the evaluation-value generator 312 are linked with each other, in accordance with the set information.

Next, the management portion 300 inputs a target time and date to the time-and-date term generator 308 (Step S104). Subsequently, the time-and-date term generator 308 generates weather data corresponding to the time and date as a term 1 (a time-and-date term) (Step S106).

Next, the management portion 300 inputs weather-related forecast data of each term with error information corresponding to the target time and date from the storage 302 to the evaluation-value generator 312 and inputs weather-related forecast data of each term without error information from the storage 302 to the error generator 310 (Step S108). The error generator 310 then generates terms 3 and 4 from the weather-related forecast data of each term without error information as forecast errors and outputs the forecast errors to the evaluation-value generator 312 (Step S110).

Subsequently, the evaluation-value generator 312 generates an evaluation value corresponding to the target time and date by weighting the weather-related data of the terms 1 to N by corresponding coefficients of the respective terms 1 to N (Step S110). The management portion 300 determines whether processing of generating an evaluation value with regard to the target time and date has ended (Step S114). When it is determined that the processing has not ended (NO at Step S114), the target time and date is changed to a next target time and date and the processes from Step S104 are repeated.

When it is determined that the processing has ended (YES at Step S114), the prediction portion 314 predicts a time at which demand response that changes a pattern of power consumption or power production is performed and the amount of power in accordance with the time-series evaluation value generated by the evaluation-value generator 312 (Step S116). Subsequently, the operation planning portion 316 makes an operation plan of the hydrogen energy system 1a or 1b in accordance with the demand response time and the amount of power corresponding to the amount of demand increase/reduction predicted by the prediction portion 314 (Step S118).

In this manner, a gap between power demand and a forecast is predicted based on the statistical data term 1 related to weather and the forecast errors (the terms 2 to N) of weather-related data.

As described above, according to the present embodiment, the evaluation-value generator 312 generates a time-series evaluation value based on a time-series error of weather-related forecast data and, as for a time at which demand response that changes a pattern of power consumption or power production is performed and the amount of power, the prediction portion 314 predicts at least the time in accordance with the time-series evaluation value. Therefore, it is possible to reduce a gap between a time slot in which demand response is planned by the hydrogen system 10 and a time slot in which demand response is actually needed in the power system 40.

### (Second embodiment)

The power prediction device 30 according to a second embodiment is different from the power prediction device 30 according to the first embodiment in further including a learning function portion 328 and an evaluation function portion 330. Differences between the power prediction device 30 according to the second embodiment and the power prediction device 30 according to the first embodiment are described below.

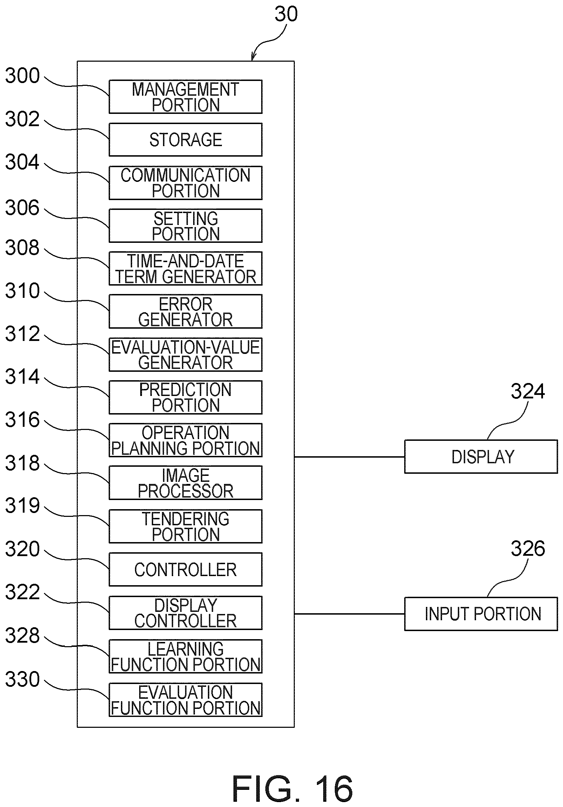

FIG. 16 is a block diagram illustrating a configuration of the power prediction device 30 according to the second embodiment. The power prediction device 30 according to the present embodiment further includes the learning function portion 328 and the evaluation function portion 330 as illustrated in FIG. 16.

The learning function portion 328 generates a learning result used by the evaluation function portion 330. For example, the learning function portion 328 generates a learning data set including pairs of a combination of data of terms 1 to N at each time and training data indicating the amount of power of demand response at that time. For example, the learning data set is obtained by combining a combination of past data of the terms 1 to N and the amount of power for which demand response has actually been sold in a time slot that matches the terms 1 to N from past market transaction data. Alternatively, the learning data set is obtained by combining a combination of data of the terms 1 to N used in past prediction and the amount of power of demand response that has actually occurred at that time. Therefore, generation of the learning data set requires a predetermined operation period. A widely used algorithm can be used in a learning process of the learning function portion 330. For example, a neural network and Lasso regression can be used in the learning process.

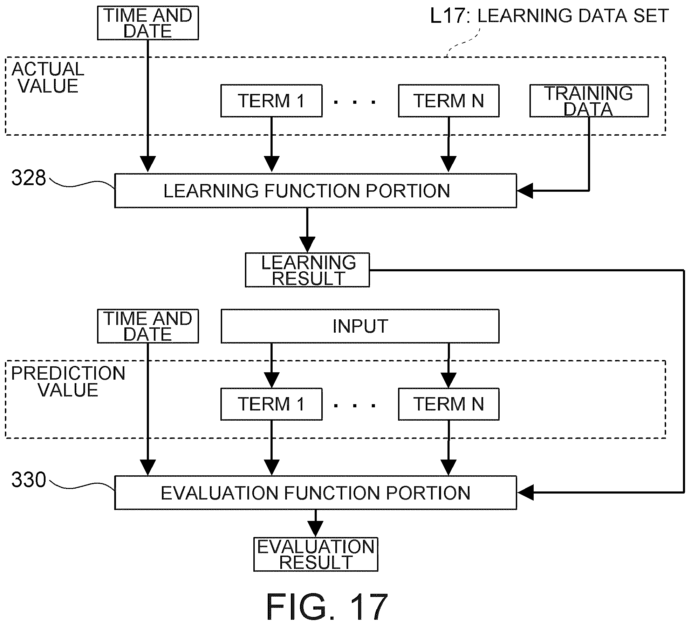

FIG. 17 is a diagram schematically illustrating an example of a learning process in the learning function portion 328. As illustrated in FIG. 17, the learning function portion 328 receives past data of the terms 1 to N or data of the terms 1 to N used in past prediction as inputs and performs learning by using information on actually sold demand response in a time slot that matches those terms 1 to N or a result of demand response that has actually occurred, obtained from past market transaction data, as training data. Leaning data may include a time and date itself in the form of a numerical value. In a case where power demand is highly seasonal, correlation between a time and date and the amount of power of demand response may be high, and forecast accuracy may be improved.

The evaluation function portion 330 predicts the amount of power for which demand response is sold and a time at which demand response is performed, by using the result of learning of the learning function portion 328. For example, the evaluation function portion 330 receives the terms 1 to N with regard to a prediction target time slot as inputs to obtain an evaluation result. The evaluation result is used as a prediction result. For example, when a numerical value converted from a time and date and data of the terms 1 to N are input, the evaluation function portion 330 outputs the amount of power of demand response corresponding to that time and date as a prediction result.

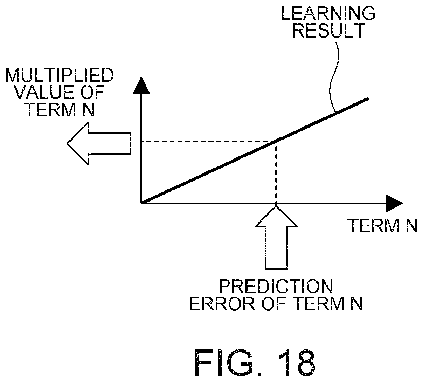

FIG. 18 is a diagram schematically illustrating an example of learning a coefficient of the term N by Lasso regression. The vertical axis represents a multiplied value obtained by multiplying a value of the term N by a coefficient of the term N. That is, the coefficient of the term N is learned as a slope of input and output. Referring back to FIG. 17 again, the coefficients of the terms 1 to N are generated as the learning result of the learning function portion 328. Setting of the coefficients of the terms 1 to N can be automatically performed in the evaluation function portion 330 in this manner. Further, contribution rates of the terms 1 to N to the training data are also calculated in learning by Lasso regression. Therefore, it is also possible to perform prediction that excludes a term with a low contribution rate from the inputs to the evaluation function portion 330.

In a case of learning using a neural network, the learning function portion 328 is learned as a nonlinear multivariate input function with respect to inputs of the terms 1 to N. Therefore, it is possible to make an output value with respect to the inputs of the terms 1 to N closer to a value of the training data. Meanwhile, in a case where the number of pieces of the learning data is small because of so-called "overtraining", the output value may be affected by statistical bias.

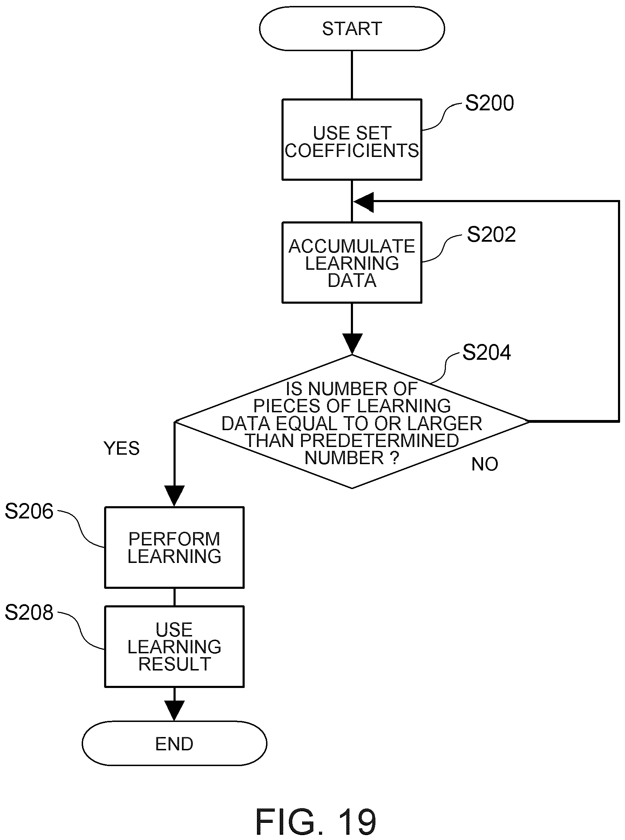

FIG. 19 is a flowchart illustrating a processing example before start of processing using a result of learning of the learning function portion 328. First, preset coefficients of the terms 1 to N are used in the evaluation-value generator 312 as illustrated in FIG. 19 (Step S200).

The learning function portion 328 stores learning data in which values of the terms 1 to N and the amount of power of demand response that has actually occurred are combined with each other in the storage 302 (Step S202). The learning function portion 328 determines whether the number of pieces of learning data that have been accumulated is equal to or larger than a predetermined number (Step S204). For example, if demand response is not performed actually, the corresponding data is not included in the learning data. Therefore, when the learning function portion 328 has determined that the number of occurrences of demand response has not exceeded the predetermined number (NO at Step S204), the learning function portion 328 repeats the processes from Step S202.

Meanwhile, when the learning function portion 328 has determined that the number of occurrences of demand response has exceeded the predetermined number (YES at Step S204), the learning function portion 328 performs learning using the learning data (Step S206). The evaluation function portion 330 then starts processing using the learning result of the learning function portion 328 (Step S208) and ends the learning process. As described above, regarding prediction of a time and the power amount of demand response, it is possible to switch a case of using the evaluation-value generator 312 for predicting at least the time and a case of using the evaluation function portion 330 in accordance with a predetermined condition, for example, the accumulation amount of the learning data. That is, the evaluation-value generator 312 generates an evaluation value by using the set coefficients until the learning data required for learning of the learning function portion 328 is accumulated. Therefore, it is possible to prevent reduction of forecast accuracy. Meanwhile, when the learning data has been accumulated, it is possible to predict the amount of power of demand response corresponding to a time and date with high accuracy by the evaluation function portion 330, so that forecast accuracy can be improved more.

As described above, according to the present embodiment, the learning function portion 328 is provided which performs learning of an evaluation function of the evaluation function portion 330. Therefore, it is possible to configure the evaluation function portion 330 corresponding to demand response that has actually occurred.

While certain embodiments have been described above, these embodiments have been presented by way of example only, and are not intended to limit the scope of the inventions. Indeed, the novel devices, methods, and programs described herein may be embodied in a variety of other forms; furthermore, various omissions, substitutions and changes in the forms of devices, methods, and programs described herein may be made without departing from the spirit of the inventions.

At least a part of the power prediction device 30 can be constituted by hardware or software. When it is constituted by software, the power prediction device 30 can be configured such that a program for realizing at least a part of the functions of the power prediction device 30 is stored in a recording medium such as a flexible disk or a CD-ROM, and the program is read and executed by a computer. The recording medium is not limited to a detachable device such as a magnetic disk or an optical disk, and can be a fixed recording medium such as a hard disk device or a memory. Further, at least a part of the power prediction device 30 can be implemented by one or more of the processors. For example, the processor is one or more of electronic circuits each including a control unit and an arithmetic unit. The electronic circuit is realized by an analog circuit, a digital circuit, or the like. For example, a general-purpose processor, a central processing unit (CPU), a microprocessor, a digital signal processor (DSP), an ASIC, an FPGA, or combinations thereof can be used as the electronic circuit. For example, at least a part of the power prediction device 30 is at least a part of the management portion 300, the communication portion 304, the setting portion 306, the time-and-date term generator 308, the error generator 310, the evaluation-value generator 312, the prediction portion 314, the operation planning portion 316, the image processor 318, the tendering portion 319, the controller 320, the display controller 322, the learning function portion 328, and the evaluation function portion 330. It is also possible that one constituent element is implemented by being divided into a plurality of processors.

While certain embodiments have been described, these embodiments have been presented by way of example only, and are not intended to limit the scope of the inventions. Indeed, the novel embodiments described herein may be embodied in a variety of other forms and various omissions, substitutions, and changes may be made without departing from the spirit of the inventions. The embodiments and their modifications are intended to be included in the scope and the spirit of the invention and also in the scope of the invention and their equivalents described in the claims.

## Claims

1. A power prediction device (30) comprising:
an evaluation-value generator configured to generate a time-series evaluation value based on a time-series error of weather-related forecast data (312); and
a prediction portion (314) configured to, as for a time and an amount of power of demand response that changes a pattern of power consumption or power production, predict at least the time in accordance with the time-series evaluation value.

2. The device (30) of Claim 1, wherein the prediction portion (314) predicts either a time at which the evaluation value exceeds a predetermined threshold or a time contained in a top predetermined percentage of times at which the evaluation value exceeds the predetermined threshold as the time of demand response.

3. The device (30) of Claims 1 or 2, further comprising an error generator (310) configured to generate the time-series error based on difference values of the weather-related forecast data at different times, wherein
the evaluation-value generator (312) generates the time-series evaluation value based on a time-series error generated by the error generator.

4. The device (30) of any one of Claims 1 to 3, wherein the prediction portion (314) predicts the amount of power in demand response based on the evaluation value.

5. The device (30) of any one of Claims 1 to 4, wherein the evaluation value is a value based on a time-series error of plural types of forecast data.

6. The device (30) of Claim 5, wherein, in a case where the evaluation value is a value based on the time-series error of the plural types of forecast data, the evaluation value is a value obtained by adding plural types of time-series errors with respective predetermined weights to each other.

7. The device (30) of Claim 6, wherein the evaluation value is a value obtained by further using a time-series string of values each indicating likelihood of demand response at each time and date.

8. The device (30) of any one of Claims 1 to 7, wherein, in a case where the time-series error includes both an upward error and a downward error, the evaluation-value generator (312) selects a larger one of the upward error and the downward error and performs evaluation.

9. The device (30) of any one of Claims 1 to 8, wherein, in a case where the time-series error includes both an upward error and a downward error, the evaluation-value generator (312) performs evaluation based on an average of absolute values of both the errors.

10. The device (30) of any one of Claims 1 to 8, wherein the prediction portion (314) predicts increase of power demand and reduction of power demand in a case where the evaluation value is above a predetermined value and swings upward and in a case where the evaluation value is below a predetermined value and swings downward, respectively.

11. The device (30) of any one of Claims 1 to 8, wherein, in a case where the weather-related data is a single type of data, the prediction portion (314) predicts increase of power demand when the time-series error swings upward, and predicts reduction of power demand when the time-series error swings downward.

12. The device (30) of any one of Claims 1 to 11, wherein at least any of a weather forecast, a temperature forecast, an insolation amount forecast, and a renewable energy power generation forecast is included in the forecast data.

13. The device (30) of Claim 12, wherein at least any of a wholesale electricity market price and a balancing market price is able to be included in the forecast data.

14. The device (30) of Claim 3, wherein, in a case where a gap of weather forecasts including at least sunny, cloudy, and rainy is used as an error, the evaluation-value generator (312) generates a score in accordance with a combination of sunny, cloudy, and rainy.

15. A power prediction method comprising:
evaluation-value generating of generating a time-series evaluation value based on a time-series error of weather-related forecast data; and
as for a time and an amount of power of demand response that changes a pattern of power consumption or power production, predicting at least the time in accordance with the time-series evaluation value.
